(19) Europäisches Patentamt
European Patent Office
Office européen des brevets

(11) Publication number: **0 276 077 B1**

(12) **EUROPEAN PATENT SPECIFICATION**

(45) Date of publication of patent specification: **23.12.92** (51) Int. Cl.⁵: **C01F 11/46**

(21) Application number: **88300249.5**

(22) Date of filing: **13.01.88**

(54) **A process for forming finely divided calcium sulphate.**

(30) Priority: **21.01.87 GB 8701263**

(43) Date of publication of application:
**27.07.88 Bulletin 88/30**

(45) Publication of the grant of the patent:
**23.12.92 Bulletin 92/52**

(84) Designated Contracting States:
**AT BE CH DE ES FR GR IT LI LU NL SE**

(56) References cited:
**DE-A- 3 511 945**
**GB-A- 2 173 781**
**US-A- 2 188 494**

**CHEMICAL ABSTRACTS, vol. 102, no. 22, June 1985, pages 89-90, abstract no. 186728w, Columbus, Ohio, US; & FI-A-67 568 (KEMIRA OY) 31-12-1984**

(73) Proprietor: **ECC INTERNATIONAL LIMITED**
**John Keay House**
**St. Austell Cornwall PL25 4DJ(GB)**

(72) Inventor: **Riley, Peter William**
**2 Westbourne Drive**
**St. Austell Cornwall(GB)**
Inventor: **Jepson, Walter Brian**
**14 Pennor Drive**
**St. Austell Cornwall(GB)**

(74) Representative: **Bull, Michael Alan et al**
**Haseltine Lake & Co. Hazlitt House 28 Southampton Buildings Chancery Lane**
**London WC2A 1AT(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

## Description

This invention relates to a process for preparing an aqueous suspension of finely divided calcium sulphate.

If it is intended that calcium sulphate should be used as a pigment in a paper coating composition or in a water-based paint, it is desirable to be able to provide an aqueous suspension containing at least 60% by weight, preferably at least 65% by weight, and more preferably at least 70% by weight of the calcium sulphate, and the particle size distribution of the calcium sulphate should be such that at least 50% by weight of the particles have an equivalent spherical diameter smaller than 2 micrometres.

Calcium sulphate is available naturally or synthetically, often as the by-product of a chemical reaction, in the form of either large lumps or relatively coarse particles and it is necessary to grind the material in order to obtain a final particle size distribution of the order indicated above. This grinding is most commonly performed in a relatively concentrated aqueous suspension, i.e. one containing at least 65% by weight of dry solids. However, at solids contents in this range aqueous suspensions of alkaline earth metal compounds are generally highly viscous because the solid particles can carry either positive or negative electrical charges leading to attraction between the particles to form a flocculated structure. Therefore, before grinding, a dispersing agent must be added to confer a uniform electrical charge, usually negative, on the particles so that they repel one another and remain as discrete particles.

Moreover, calcium sulphate dihydrate is soluble in water to the extent of 2.4g/l. at 25 °C. The calcium ions in solution form complexes with a polyelectrolyte dispersing agent and render it inactive and it has therefore been necessary, when grinding calcium sulphate, to use a dispersing agent which also acts as a protective colloid, for example a hydrophilic polymeric material. Carboxymethyl cellulose and starch phosphates are two examples of dispersing agents of this type. When grinding to a fine particle size is performed at high solids concentration, the heat and mechanical shearing action generated by the grinding tends to break down the dispersing agent so that it is necessary to use a high initial dose of dispersing agent which significantly increases the cost of the process. However, when using a high initial dose of dispersing agent, it is common for a quantity of the dispersing agent to remain after grinding and this can cause problems in dewatering the aqueous suspension. Thus, with calcium sulphate, it is not possible to achieve a sufficiently dry cake by mechanical dewatering alone and it is necessary, subsequently, to dry the cake by thermal energy. During thermal drying, however, hard aggregates of the finely ground particles tend to form thus effectively coarsening the product. Moreover, in the case of calcium sulphate dihydrate, if the thermal drying is carried out at a temperature above 70 °C, some of the water of crystallisation is driven off and the calcium sulphate is at least partially converted to a less hydrated form. A further disadvantage of mechanical dewatering is that the cake produced is wet and sticky and, therefore, very difficult to handle.

In DE-A-3 511 945, there is disclosed a process for the manufacture of coating pigments and fillers, wherein gypsum obtained by the desulphurization of flue gas, which gypsum has a minimum degree of purity of 96% and a minimum degree of whiteness of 80%, is ground to a particle size of less than 5 microns.

According to the present invention there is provided a process for preparing an aqueous suspension containing at least 60% by weight of calcium sulphate having a particle size distribution such that at least 50% by weight of the particles have an equivalent spherical diameter smaller than 2 micrometres, which process comprises the following steps:

(a) mixing a coarse calcium sulphate with water to form an aqueous suspension containing from 5 to 45% by weight of dry solids;

(b) comminuting the coarse calcium sulphate in the suspension formed in step (a) by agitating the suspension in admixture with a particulate grinding medium until the calcium sulphate has a particle size distribution such that at least 50% by weight of the particles have an equivalent spherical diameter smaller than 2 micrometres;

(c) separating the aqueous suspension of ground calcium sulphate formed in step (b) from the particulate grinding medium;

(d) dewatering the aqueous suspension in a filter press at a pressure of at least 500 pounds per square inch (3.45 MPa); and

(e) mixing the dewatered product of step (d) with an amount of a dispersing agent sufficient to convert the dewatered product into a fluid suspension; and wherein steps (a) to (d) are conducted in the absence of a dispersing agent.

The process of the present invention is particularly suitable for the preparation of a high solids aqueous suspension of calcium sulphate as it avoids the need for the presence of a dispersing agent during the comminution and dewatering steps.

The high pressure in the dewatering stage is required to provide a cake which is sufficiently hard and non-tacky for successful handling. If any dispersing agent were present during the dewatering step (d) this would tend to increase the fluidity of any cake formed in the filter press and would therefore counteract the high pressure used in step (d). If the solids content of the aqueous suspension is to be in the range of from 60% to 65% by weight, it is preferred that the calcium sulphate be very fine with substantially all of the particles having an equivalent spherical diameter smaller than 2 micrometres.

Before step (a) the calcium sulphate may first be subjected to a crushing operation to reduce the material from large lumps of size up to about 150mm diameter to particles having diameters smaller than about 15mm. These particles of intermediate size may then be mixed with water to form a suspension containing from 5 to 45%, preferably from 20 to 40%, by weight of dry solids and subjected to a preliminary grinding stage in which the suspension is agitated with grinding elements consisting of small pellets or balls of steel or ceramic material. This preliminary grinding stage is advantageously performed under conditions such that the ground product consists predominantly of particles smaller than a No. 300 mesh B.S. sieve (nominal aperture 0.053mm). The grinding elements used in the preliminary grinding stage preferably have diameters in the range from about 5mm to 25mm and most preferably from about 10mm to 15mm. The preliminary grinding stage may be performed in closed circuit with a particle size separation device such as a hydraulic cyclone which returns insufficiently ground material to the mill. Preferably, the particles of the calcium sulphate used in step (a) should have a diameter smaller than about 1mm, most preferably smaller than 60 micrometres.

In step (b) the particulate grinding medium preferably consists of particles not larger than about 5mm and not smaller than about 0.25mm. The grinding medium should be formed of a harder material than the calcium sulphate to be ground; for example it may consist of approximately spherical particles of silica sand, or of small beads or spherules of a ceramic material. The grinding can conveniently be carried out by agitating the aqueous suspension of the calcium sulphate and the particulate grinding medium in a vessel which is provided with an impeller mounted on a central, vertical shaft and with a sieve in the side of the vessel which allows particles which have been sufficiently finely ground to pass but retains coarser particles in the vessel. The diameter of the smallest particles which are present in the particulate grinding medium is conveniently about twice the aperture size of the sieve. During grinding in step (b) it is preferable that at least 400kJ of energy per kg of dry solids is dissipated. More preferably, at least 700kJ per kg should be dissipated.

In step (c) the high pressure filter press is preferably a tube pressure filter of the type disclosed, for example, in British Patent Specifications Nos. 1240465, 1582957 or 2072032; alternatively, a high pressure plate filter of the type disclosed, for example, in British Patent Specification No. 1389003 could be used. It is desirable to produce a calcium sulphate cake containing no more than 25% by weight of water so the cake is not sticky and difficult to handle. For this purpose it is preferable to operate the filter press at a pressure of at least 1000 pounds per square inch (6.89MPa), more preferably at a pressure of at least 1500 pounds per square inch (10.3MPa).

In step (e) the preferred dispersing agent should be of the protective colloid type, for example a cellulose derivative such as sodium carboxymethyl cellulose or a starch derivative such as starch phosphate, or alternatively a phosphate ester of type A or type B below:-

TYPE A

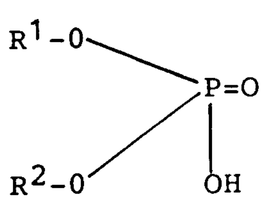

TYPE B

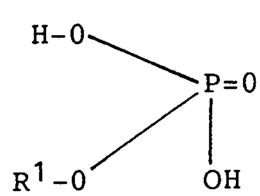

in which $R^1$ and $R^2$, which may be the same or different, may be an alkyl group, an aryl group or an aralkyl group. Preferably the alkyl, aryl or aralkyl group does not contain more than 10 carbon atoms.

The quantity of dispersing agent used will generally be in the range of from 0.05% to 5% by weight, based on the weight of dry calcium sulphate. However, the quantity required will preferably be in the range of from 1% to 5% by weight based on the weight of the dry compound.

The invention is illustrated by the following Example.

**EXAMPLE**

A phosphogypsum material formed as a by-product of the process of extracting phosphate rock with sulphuric acid in the manufacture of fertilisers consisted of crystals of calcium sulphate dihydrate. The crystalline material was mixed with water in the absence of a dispersing agent to form a slurry containing about 40% by weight of dry solids which was introduced into a grinding chamber containing 12.5mm diameter pebbles as grinding elements. The slurry was agitated with the pebbles by means of an impellor rotating on a central vertical shaft for a time sufficient to give a product consisting of particles substantially all of which had a diameter smaller than 53 micrometres. Of the ground particles, 20% by weight were found to have an equivalent spherical diameter smaller than 2 micrometres.

The suspension of pebble-milled material was diluted with water to a solids content of about 30% by weight and the diluted suspension was introduced into a grinding chamber containing, as the grinding medium, grains of silica sand having diameters in the range of from 0.5mm to 1mm. The contents of the grinding chamber were agitated by means of an impellor rotating on a central vertical shaft and samples of the ground product were withdrawn through a No. 300 mesh B.S. (0,053mm) sieve after times sufficient to dissipate in the suspension 144 kJ, 360 kJ, 432 kJ and 720 kJ of energy respectively per kilogram of dry solids. The percentage by weight of particles having an equivalent spherical diameter smaller than 2 micrometres was then determined for each sample of the ground product.

As a comparison, a further batch of the same phosphogypsum was mixed with water to form a slurry containing about 70% by weight of dry solids, there also being added 1.5% by weight, based on the weight of dry solids, of a sodium carboxymethyl cellulose dispersing agent for the calcium sulphate. The slurry was first pebble-milled as described above to give a product consisting of particles substantially all of which had a diameter smaller than 53 micrometres. The suspension of the pebble-milled product was then diluted with water to a solids content of 65% by weight and further ground with silica sand as a grinding member as described above. Samples were withdrawn through a No. 300 mesh BS (0.053mm) sieve after times sufficient to dissipate in the suspensions 144 kJ, 360 kJ, 432 kJ, 720 kJ and 1440 kJ of energy respectively per kilogram of dry solids. These samples were then tested for the percentage by weight of particles which had an equivalent spherical diameter smaller than 2 micrometres.

The results obtained are set forth in Table 1 below:-

**TABLE 1**

| Energy dissipated in suspension ($kJ.kg^{-1}$) | % by weight smaller than 2 micrometres e.s.d ground at 30% solids | % by weight smaller than 2 micrometres e.s.d ground at 65% solids |
|---|---|---|
| 144 | 51 | 48 |
| 360 | 88 | 65 |
| 432 | 94 | 79 |
| 720 | 95 | 94 |
| 1440 | - | 95 |

These results show that a given degree of fineness of the product of the second grinding stage can be obtained with the consumption of a smaller quantity of energy if the grinding is performed at a relatively low solids content of the suspension (in this Example, 30% by weight of dry solids rather than 65% by weight of solids).

Samples of the material ground at 30% by weight of solids at three different energy levels were dewatered in a laboratory high pressure filter press at pressures of 0.83 MPa, 3.45MPa, 6.89MPa, 10.34MPa and 13.79MPa respectively and the water content of the filter cake formed was measured in each case.

The results obtained are set forth in Table II below:-

**TABLE II**

| Energy ($kJ.kg^{-1}$) | % by weight of water in cake at a pressure (MPa) of 0.83 | 3.45 | 6.89 | 10.34 | 13.79 |
|---|---|---|---|---|---|
| 144 | 30 | 25 | 20 | 18 | - |
| 432 | 34 | 27 | 25 | 23 | 22 |
| 720 | 37 | 31 | 27 | 26 | 24 |

It was found that filter press cakes containing more than 30% by weight of water were sticky and difficult to handle and that for easiest handling the water content was required to be no greater than 25% by weight. It can therefore be seen that if a calcium sulphate product containing at least 90% by weight of particles having an equivalent spherical diameter smaller than 2 micrometres is required, at least 400 kJ of energy per kg of dry solids must be dissipated during the fine grinding stage and the suspension of the ground product must be dewatered at a pressure of a least 6.89 MPa (1000psi).

**Claims**

**1.** A process for preparing an aqueous suspension containing at least 60% by weight of calcium sulphate having a particle size distribution such that at least 50% by weight of the particles have an equivalent spherical diameter smaller than 2 micrometres, which process comprises the following steps:

(a) mixing a coarse calcium sulphate with water to form an aqueous suspension containing from 5 to 45% by weight of dry solids;

(b) comminuting the coarse calcium sulphate in the suspension formed in step (a) by agitating the suspension in admixture with a particulate grinding medium until the calcium sulphate has a particle size distribution such that at least 50% by weight of the particles have an equivalent spherical diameter smaller than 2 micrometres;

(c) separating the aqueous suspension of ground calcium sulphate formed in step (b) from the particulate grinding medium;

(d) dewatering the aqueous suspension in a filter press at a pressure of at least 500 pounds per square inch (3.45 MPa); and

(e) mixing the dewatered product of step (d) with an amount of a dispersing agent sufficient to convert the dewatered product into a fluid suspension;

wherein steps (a) to (d) are conducted in the absence of a dispersing agent.

**2.** A process according to Claim 1, wherein in step (a) the calcium sulphate consists of particles smaller than 1mm.

**3.** A process according to Claim 2, wherein in step (a) the calcium sulphate consists of particles having a diameter smaller than about 60 micrometres.

**4.** A process according to any one of the preceding claims, wherein the dewatering step is conducted at a pressure of at least 1000 pounds per square inch (6.89 MPa).

**5.** A process according to any one of the preceding claims, wherein the dewatering step is conducted at a pressure of at least 1500 pounds per square inch (10.3 MPa).

**6.** A process according to any one of the preceding claims, wherein at least 400kJ of energy, per kg of dry solids, is dissipated during the grinding step (b).

**7.** A process according to any one of the preceding claims, wherein the aqueous suspension in step (a) contains from 20 to 40% by weight of dry solids.

**8.** A process according to any one of the preceding claims, wherein the particulate grinding medium consists of particles not larger than 5mm and not smaller than 0.25mm.

**9.** A process according to any one of the preceding claims, wherein the dispersing agent is of the

protective colloid type.

10. A process according to any one of the preceding claims, wherein the fluid suspension has a dry solids content of at least 65% by weight.

11. An aqueous suspension of comminuted calcium sulphate whenever produced by a process as claimed in any one of the preceding claims.

**Patentansprüche**

1. Verfahren zum Herstellen einer wässerigen Suspension von Calciumsulfat, welche zumindest 60 Gew.-% Calciumsulfat mit einer solchen Teilchengrößenverteilung enthält, daß zumindest 50 Gew.-% der Teilchen einen äquivalenten Kugeldurchmesser von 2 µm aufweisen, bei welchem Verfahren
   (a) grobes Calciumsulfat mit Wasser unter Bildung einer zumindest 5 bis 45 Gew.-% trockene Feststoffe enthaltenden wässerigen Suspension vermischt wird,
   (b) das in der gemäß Stufe (a) hergestellten Suspension vorliegende grobe Calciumsulfat durch Rühren der mit einem teilchenförmigen Mahlmedium vermischten Suspension zerkleinert wird bis das Calciumsulfat eine solche Teilchengrößenverteilung aufweist, daß zumindest 50 Gew.-% der Teilchen einen äquivalenten Kugeldurchmesser von weniger als 2 µm besitzen,
   (c) die gemäß Stufe (b) gebildete wässerige Suspension von vermahlenem Calciumsulfat vom teilchenförmigen Mahlmedium abgetrennt wird,
   (d) die wässerige Suspension in einer Filterpresse bei einem Druck von zumindest 500 Pfund je Quadratzoll (3,45 MPa) entwässert wird und
   (e) das entwässerte Produkt gemäß Stufe (d) mit einer solchen Menge eines Dispergiermittels vermischt wird, die ausreicht das entwässerte Produkt in eine fließfähige Suspension überzuführen,
   wobei die Stufen (a) bis (d) in Abwesenheit eines Dispergiermittels durchgeführt werden.

2. Verfahren nach Anspruch 1, worin in Stufe (a) das Calciumsulfat aus Teilchen mit einer kleineren Größe als 1 mm besteht.

3. Verfahren nach Anspruch 2, worin in Stufe (a) das Calciumsulfat aus Teilchen mit einem Durchmesser von weniger als etwa 60 µm besteht.

4. Verfahren nach irgendeinem der vorhergehenden Ansprüche, worin die Entwässerungsstufe bei einem Druck von zumindest 1000 Pfund je Quadratzoll (6,89 MPa) durchgeführt wird.

5. Verfahren nach irgendeinem der vorhergehenden Ansprüche, worin die Entwässerungsstufe bei einem Druck von zumindest 1500 Pfund je Quadratzoll (10,3 MPa) durchgeführt wird.

6. Verfahren nach irgendeinem der vorhergehenden Ansprüche, worin beim Vermahlen gemäß Stufe (b) eine Energie von zumindest 400 KJ je kg trockener Feststoffe umgesetzt wird.

7. Verfahren nach irgendeinem der vorhergehenden Ansprüche, worin die wässerige Suspension in Stufe (a) 20 bis 40 Gew.-% trockene Feststoffe enthält.

8. Verfahren nach irgendeinem der vorhergehenden Ansprüche, worin das teilchenförmige Mahlmedium aus Teilchen mit einer Größe von nicht mehr als 5 mm und nicht weniger als 0,25 mm besteht.

9. Verfahren nach irgendeinem der vorhergehenden Ansprüche, worin das Dispergiermittel vom Schutzkolloidtyp ist.

10. Verfahren nach irgendeinem der vorhergehenden Ansprüche, worin die fließfähige Suspension einen Gehalt an trockenen Feststoffen von zumindest 65 Gew.-% besitzt.

11. Eine wässerige Suspension von zerkleinertem Calciumsulfat, wann immer sie durch ein in irgendeinem der vorhergehenden Ansprüche beanspruchtes Verfahren hergestellt worden ist.

**Revendications**

1. Procédé pour la préparation d'une suspension aqueuse contenant au moins 60 % en poids de sulfate de calcium ayant une distribution de tailles de particules telle qu'au moins 50 % en poids des particules ont un diamètre de sphères équivalentes inférieur à 2 µm, lequel procédé comprend les étapes suivantes:
   (a) mélangeage avec de l'eau d'un sulfate de calcium à grosses particules, pour la formation d'une suspension aqueuse contenant de 5 à 45 % en poids de matière sèche;
   (b) fragmentation du sulfate de calcium à grosses particules dans la suspension formée dans l'étape (a), par agitation de la suspension en mélange avec un élément particulaire broyeur, jusqu'à ce que le sulfate de calcium ait une distribution de tailles de particules telle qu'au moins 50 % en poids des particules aient un diamètre de sphères équivalentes inférieur à 2 µm;
   (c) séparation de la suspension aqueuse de sulfate de calcium broyé, formée dans l'étape (b), d'avec l'élément particulaire broyeur;
   (d) déshydratation de la suspension aqueuse dans un filtrepresse sous une pression d'au moins 3,45 MPa (500 psi); et
   (e) mélangeage du produit déshydraté de l'étape (d) avec une quantité suffisante d'un dispersant pour convertir le produit déshydraté en une suspension fluide;

   les étapes (a) à (d) étant effectuées en l'absence de dispersant.

2. Procédé selon la revendication 1, dans lequel, dans l'étape (a), le sulfate de calcium est constitué de particules de taille inférieure à 1 mm.

3. Procédé selon la revendication 2, dans lequel, dans l'étape (a), le sulfate de calcium est constitué de particules ayant un diamètre inférieur à environ 60 µm.

4. Procédé selon l'une quelconque des revendications précédentes, dans lequel l'étape de déshydratation est effectuée sous une pression d'au moins 6,89 MPa (1 000 psi).

5. Procédé selon l'une quelconqe des revendications précédentes, dans lequel l'étape de déshydratation est effectuée sous une pression d'au moins 10,3 MPa (1 500 psi).

6. Procédé selon l'une quelconque des revendications précédentes, dans lequel au moins 400 kJ d'énergie, par kg de matière sèche, sont dissipés au cours de l'étape de broyage (b).

7. Procédé selon l'une quelconque des revendications précédentes, dans lequel la suspension aqueuse dans l'étape (a) contient de 20 à 40 % en poids de matière sèche.

8. Procédé selon l'une quelconque des revendications précédentes, dans lequel l'élément broyeur particulaire est constitué de particules de taille n'excédant pas 5 mm et non inférieure à 0,25 mm.

9. Procédé selon l'une quelconque des revendications précédentes, dans lequel le dispersant est du type colloïde protecteur.

10. Procédé selon l'une quelconque des revendications précédentes, dans lequel la suspension fluide a une teneur en matière sèche d'au moins 65 % en poids.

11. Suspension aqueuse de sulfate de calcium fragmenté, lorsqu'elle est obtenue par un procédé selon l'une quelconque des revendications précédentes.